# EUROPÄISCHE PATENTANMELDUNG

(11) **EP 4 822 959 A1**
(43) Veröffentlichungstag der Anmeldung: **14.10.2026**
(21) Anmeldenummer: 25170050.6
(22) Anmeldetag: 11.04.2025
(51) Int. Cl.: H02K 7/10, H02K 7/112, H02K 11/215

(54) **KOMPAKTER ELEKTROMOTOR MIT BREMSAKTUATOR**

(71) Anmelder: maxon international ag, 6072 Sachseln (CH)
(72) Erfinder: Vogler, Daniel, 6072 Sachseln (CH); Baumgartner, Michael, 6072 Sachseln (CH); Wüthrich, Christian, 6072 Sachseln (CH)
(74) Vertreter: Grünecker Patent- und Rechtsanwälte PartG mbB

(57) **Zusammenfassung**

Die vorliegende Erfindung betrifft Elektromotor mit einem Stator, einem Rotor, der eine Rotorwelle umfasst, und einem Bremsaktuator, der einen Bremsstift umfasst und dazu eingerichtet ist, eine Bewegung des Bremsstifts zwischen einer gelösten Position und einer angezogenen Position zu bedingen, wobei der Bremsstift in der angezogenen Position eine Bewegung des Rotors um eine Rotorachse, die eine axiale Richtung des Elektromotors definiert, blockiert. Erfindungsgemäß ist vorgesehen, dass der Bremsaktuator derart eingerichtet ist, dass die Bewegung des Bremsstifts in einer Ebene senkrecht zur Rotorachse erfolgt.

## Beschreibung

Die vorliegende Erfindung bezieht sich auf einen Elektromotor gemäß dem Oberbegriff des Anspruchs 1.

Ein gattungsgemäßer Elektromotor umfasst einen Stator, einen Rotor, der eine Rotorwelle umfasst, und einen Bremsaktuator, der einen Bremsstift umfasst und dazu eingerichtet ist, eine Bewegung des Bremsstifts zwischen einer gelösten Position und einer angezogenen Position zu bedingen, wobei der Bremsstift in der angezogenen Position eine Bewegung des Rotors um eine Rotorachse, die eine axiale Richtung des Elektromotors definiert, blockiert.

Ein derartiger Elektromotor ist beispielsweise aus der US 2019/0301548 Al bekannt. Dabei ist der Bremsaktuator derart angeordnet, dass die Bewegung des Bremsstifts zwischen der gelösten Position und der angezogenen Position in der axialen Richtung des Rotors erfolgt und der Bremsstift in der angezogenen Position in eine Aussparung eines mit der Rotorwelle gekoppelten Brems-Rotors greift, um die Bewegung des Rotors zu blockieren.

Insbesondere für Elektromotoren, die als Antrieb von Gelenkantrieben für Robotikanwendungen verwendet werden, sind derartige Bremsaktuatoren relevant, um die Position des Rotors fixeren zu können und ein Abdriften der Position zu verhindern. Dabei sind für derartige Elektromotoren das Gewicht und der Bauraum, insbesondere in der axialen Richtung des Rotors, besonders relevant. Hierfür gibt es gegenüber den bekannten Elektromotoren weiteren Verbesserungsbedarf.

Die Aufgabe der vorliegenden Erfindung besteht daher darin, einen Elektromotor mit Bremsaktuator anzugeben, der eine Verringerung des Gewichts und des Bauraums ermöglicht.

Die Aufgabe wird durch die Merkmale des unabhängigen Anspruchs 1 gelöst. Demnach liegt eine erfindungsgemäße Lösung der Aufgabe vor, wenn der Bremsaktuator derart eingerichtet ist, dass die Bewegung des Bremsstifts in einer Ebene senkrecht zur Rotorachse erfolgt.

Durch die erfindungsgemäße Lösung kann insbesondere der Bauraum in axialer Richtung verkleinert werden, da die Baulänge des Bremsaktuators in der axialen Richtung verringert werden kann.

Vorteilhafte Ausgestaltungen der vorliegenden Erfindung sind Gegenstand der Unteransprüche.

In einer bevorzugten Ausführungsform der vorliegenden Erfindung erfolgt die Bewegung des Bremsstifts zwischen der gelösten Position und der angezogenen Position in einer radialen Richtung zur Rotorachse. Dies ermöglicht einen besonders einfachen und kompakten Aufbau des Elektromotors.

In einer weiteren bevorzugten Ausführungsform der vorliegenden Erfindung ist die Rotorwelle als eine Hohlwelle ausgebildet. Durch die Verwendung einer Hohlwelle kann zusätzlich Gewicht eingespart werden. Weiter können auch Kabel für die Energie- und /oder Signalübertragung platzsparend durch den Elektromotor geführt werden.

In einer weiteren bevorzugten Ausführungsform der vorliegenden Erfindung ist der Bremsstift als Hubmagnet ausgebildet und umfasst der Bremsaktuator eine Spule, wobei ein Bestromungszustand der Spule die Position des Bremsstifts bedingt. Dadurch kann der Bremsaktuator kompakt und mit niedrigem Gewicht ausgebildet werden. Daneben ist eine derartige Ausführung kostengünstig herzustellen.

Vorzugsweise umfasst der Bremsaktuator eine zweite Spule, wobei ein zweiter Bestromungszustand der zweiten Spule die Position des Bremsstifts ebenfalls bedingt. Hierdurch ergibt sich eine Redundanz, sodass der Bremsaktuator auch bei einem Ausfall der Spule oder der zweiten Spule weiterhin funktionstüchtig ist.

Ebenfalls vorzugsweise weist der Bremsaktuator eine Feder auf, die den Bremsstift in Richtung der angezogenen Position vorbelastet, wobei die Spule und/oder die zweite Spule den Bremsstift in die gelöste Position bewegt, wenn die Spule mit einer Haltespannung bestromt ist. Dadurch kann sichergestellt werden, dass der Bremsaktuator den Rotor blockiert, wenn kein Strom an dem Bremsaktuator anliegt. Entsprechend kann der Bremsaktuator auch als Haltebremse verwendet werden. Weiter ist vorzugsweise die Haltespannung im Bereich von 2 bis 3 Watt. Dadurch wird nur eine kleine elektrische Leistung benötigt, um den Bremsstift in der gelösten Position zu halten.

Daneben weist der Bremsaktuator vorzugsweise ein manuelles Rückziehelement auf, das dazu eingerichtet ist, den Bremsstift in die gelöste Position zu bewegen, wenn die Spule und/oder die zweite Spule nicht bestromt ist. Dadurch lässt sich die Blockierung des Rotors auch im unbestromten Zustand der Spule und/oder der zweiten Spule lösen.

Weiter vorzugsweise ist ein Gehäuse des Bremsaktuators als Rückschluss ausgebildet. Dadurch lässt sich der Bremsaktuators sehr kompakt ausbilden.

In einer weiteren bevorzugten Ausführungsform der vorliegenden Erfindung umfasst der Rotor einen Brems-Rotor, der an einem Umfang des Brems-Rotors verteilte Auskerbungen aufweist, die dazu eingerichtet sind, dass der Bremsstift zumindest in der angezogenen Position in eine der Auskerbungen eingreift und sich in der gelösten Position außerhalb der Auskerbungen befindet. Dadurch ergibt sich eine einfache Kopplung des Bremsaktuators mit dem Rotor zur Bremsung/Blockierung der Rotorwelle, wenn sich der Bremsstift in der angezogenen Position befindet.

Dabei ist der Brems-Rotor vorzugsweise drehfest an der Rotorwelle befestigt. Dies ermöglich einen besonders einfachen Aufbau des Rotors und die Bremswirkung des Eingreifens des Bremsstifts in die Auskerbungen des Brems-Rotors wird direkt über den Brems-Rotor auf die Rotorwelle übertragen. Weiter vorzugsweise kann der Brems-Rotor dabei derart elastisch ausgeführt sein, dass eine Bremswirkung durch das Eingreifen des Bremsstifts in eine der Auskerbungen gedämpft ist. Dadurch können Beschädigungen durch ein zu abruptes Blockieren des Bremsaktuators und des Brems-Rotors verhindert werden.

Alternativ und ebenfalls vorzugsweise ist der Brems-Rotor über eine Rutschkupplung mit der Rotorwelle gekoppelt, wobei der Brems-Rotor in der axialen Richtung an einem drehfest mit der Rotorwelle verbundenem Ringelement anliegt und ein Federelement den Brems-Rotor in der axialen Richtung auf das Ringelement drückt. Dies kann auch Beschädigungen durch ein zu abruptes Blockieren des Bremsaktuators und des Brems-Rotors verhindern. Weitervorzugsweise weisen der Brems-Rotor und/oder das Ringelement einen Reibbelag an einer Kontaktfläche des Brems-Rotors und/oder des Ringelements auf. Über die Auswahl des Reibbelags kann die erzielte Bremswirkung genau eingestellt werden. Daneben kann vorzugsweise auch eine Federkraft des Federelements derart eingestellt werden, dass ein gewünschtes Verrutschen zwischen dem Brems-Rotor und dem Ringelement beim Eingreifen des Brems-Stifts in eine der Auskerbungen des Brems-Rotors einstellbar ist. Weiter vorzugsweise weist das Ringelement eine Schulter auf, auf der der Brems-Rotor in radialer Richtung aufliegt, sodass eine zweite Kontaktfläche in radialer Richtung zwischen dem Brems-Rotor und dem Ringelement vorliegt.

In einer weiteren bevorzugten Ausführungsform der vorliegenden Erfindung umfasst der Elektromotor einen Encoder mit einer Leiterplatte und der Rotor einen Steuermagnet für den Encoder, wobei der Steuermagnet drehfest an der Rotorwelle befestigt ist. Encoder sind für bestimmte Anwendungen des Elektromotors bevorzugt, insbesondere für Robotikanwendungen. Durch die Kombination des Elektromotors mit Encoder und dem Bremsaktuator kann trotz der beiden Komponenten ein Elektromotor in einer kompakten Bauweise bereitgestellt werden.

In einer besonders bevorzugten Ausführungsform sind der Encoder und der Bremsaktuator an einer axialen Position und mit unterschiedlichen Umfangspositionen um den Rotor angeordnet. An einer axialen Position bedeutet gemäß der Anmeldung, dass ein Querschnitt senkrecht zu der axialen Richtung an einer axialen Position vorliegt, der den Encoder und den Bremsaktuator in ihren jeweiligen axialen Ausdehnungen schneidet. Dies ermöglicht einen besonders kompakten Aufbau des Elektromotors, insbesondere in der axialen Richtung, und der Bremsaktuator kann im Grunde im vorhanden axialen Bauraum für den Encoder angeordnet werden. Vorzugsweise sind die Leiterplatte und der Bremsstift in der axialen Richtung versetzt angeordnet. Vorzugsweise hat der Bremsaktuator eine axiale Ausdehnung, die gleich oder kleiner einer axialen Ausdehnung des Encoders ist, wobei sich die axiale Ausdehnung des Bremsaktuators und die axiale Ausdehnung des Encoders hinsichtlich ihrer axialen Position vollständig überlappen. Dadurch benötigt der Bremsaktuator keinen zusätzlichen axialen Bauraum und ist vollständig in den axialen Bauraum des Encoders integriert.

Vorzugsweise weist der Rotor zumindest einen Rotormagneten und der Stator eine Statorwicklung auf, wobei der Steuermagnet und der Brems-Rotor in der axialen Richtung nebeneinander und anschließend an die Statorwicklung und den zumindest einen Rotormagnet angeordnet sind, wobei der Steuermagnet weiter vorzugsweise in der axialen Richtung zwischen der Statorwicklung und dem Brems-Rotor angeordnet ist. Auch dies ermöglich einen kompakten Aufbau des Elektromotors.

In einer weiteren bevorzugten Ausführungsform der vorliegenden Erfindung ist der Bremsaktuator in einer Einschuböffnung in einem Motorgehäuse angebracht. Dadurch kann der Bremsaktuator auf einfache Weise in den Elektromotor eingebaut werden. Vorzugsweise ist dabei der Bremsaktuator als ein austauschbares Modul ausgebildet. Diese ermöglicht einen einfachen Austausch des Bremsaktuators.

In einer weiteren bevorzugten Ausführungsform der vorliegenden Erfindung weist das Motorgehäuse zumindest zwei, vorzugsweise zwei, Einschuböffnungen auf, wobei in eine der Einschuböffnung der Bremsaktuator und eine der Einschuböffnungen der Encoder angebracht sind. Dadurch können der Bremsaktuator und der Encoder auf einfache Weise in den Elektromotor eingebaut werden. Vorzugsweise ist der Bremsaktuator und/oder der Encoder jeweils als austauschbares Modul ausgebildet. Ebenfalls vorzugsweise sind die Einschuböffnungen jeweils identisch dimensioniert und der Encoder und der Bremsaktuator derart ausgebildet, dass diese in jeder der zumindest zwei Einschuböffnungen anbringbar sind. Dadurch vereinfacht sich die Montage des Elektromotors.

In einer weiteren bevorzugten Ausführungsform der vorliegenden Erfindung umfasst der Elektromotor einen zweiten Bremsaktuator, der einen zweiten Bremsstift umfasst und dazu eingerichtet ist, eine Bewegung des zweiten Bremsstifts zwischen einer zweiten gelösten Position und einer zweiten angezogenen Position zu bedingen, wobei der zweite Bremsstift in der angezogenen Position die Bewegung des Rotors um die Rotorachse blockiert, und die Bewegung des zweiten Bremsstifts in der Ebene senkrecht zur Rotorachse erfolgt. Dadurch lässt sich eine redundante Ausführung zur Erzeugung von mehr Sicherheit im Betrieb sehr einfach realisieren. Vorzugsweise erfolgt die Bewegung des zweiten Bremsstifts zwischen der zweiten gelösten Position und der zweiten angezogenen Position in einer radialen Richtung zur Rotorachse. Vorzugsweise ist der zweite Bremsstift als zweiter Hubmagnet ausgebildet und umfasst der zweite Bremsaktuator eine dritte Spule, wobei ein Bestromungszustand der dritten Spule die Position des zweiten Bremsstifts bedingt. Ebenfalls weist der zweite Bremsaktuator vorzugsweise eine zweite Feder auf, die den zweiten Bremsstift in Richtung der zweiten angezogenen Position vorbelastet, wobei die dritte Spule den zweiten Bremsstift in die zweite gelöste Position bewegt, wenn die dritte Spule mit einer zweiten Haltespannung bestromt ist. Daneben weist der zweite Bremsaktuator vorzugsweise ein zweites manuelles Rückziehelement auf, das dazu eingerichtet ist, den zweiten Bremsstift in die zweite gelöste Position zu bewegen, wenn die Spule nicht bestromt ist. Weiter vorzugsweise ist der zweite Bremsaktuator derart angeordnet, dass der zweite Bremsstift zumindest in der zweiten angezogenen Position in eine der Auskerbungen des Brems-Rotors eingreift und sich in der gelösten Position außerhalb der Auskerbungen befindet. Dabei sind vorzugsweise der Encoder, der Bremsaktuator und der zweite Bremsaktuator an der axialen Position und mit unterschiedlichen Umfangspositionen um den Rotor angeordnet, wobei weiter vorzugsweise die unterschiedlichen Umfangspositionen um 120° voneinander beabstandet sind. Ebenfalls vorzugsweise weist das Motorgehäuse drei Einschuböffnungen auf, wobei der Bremsaktuator, der zweite Bremsaktuator und der Encoder jeweils in einer der drei Einschuböffnung angebracht sind, wobei weiter vorzugsweise der zweite Bremsaktuator als austauschbares Modul ausgebildet ist.

In einer besonders bevorzugten Ausführungsform ist der Elektromotor als Gelenkantrieb für Robotikanwendungen ausgebildet.

Nachfolgend werden Ausführungsbeispiele erfindungsgemäßer Elektromotoren anhand von Zeichnungen näher erläutert.

In den Zeichnungen zeigen:
- Figur 1:: eine schematische axiale Schnittansicht durch einen Elektromotor gemäß einem ersten Ausführungsbeispiel der vorliegenden Erfindung, die einen Bremsstift eines Bremsaktuator des Elektromotors schneidet;
- Figur 2:: eine schematische axiale Schnittansicht durch den Elektromotor gemäß dem ersten Ausführungsbeispiel der vorliegenden Erfindung, die einen Encoder des Elektromotors schneidet;
- Figur 3:: eine Frontalansicht auf einen Bremsrotor eines Rotors des Elektromotors gemäß dem ersten Ausführungsbeispiel der vorliegenden Erfindung;
- Figur 4:: Schrägansicht auf eine axiale Schnittansicht durch den Elektromotor gemäß dem ersten Ausführungsbeispiel der vorliegenden Erfindung ohne den Bremsaktuator, den Encoder und Teile eines Motorgehäuses;
- Figur 5:: Schrägansicht auf einen Querschnitt senkrecht zu der axialen Richtung durch den Elektromotor gemäß dem ersten Ausführungsbeispiel der vorliegenden Erfindung an einer axialen Position eines Bremsstifts des Bremsaktuators;
- Figur 6:: Detailansicht einer Schrägansicht auf eine axiale Schnittansicht durch einen Elektromotor gemäß einem zweiten Ausführungsbeispiel der vorliegenden Erfindung, die einen Bremsstift eines Bremsaktuator des Elektromotors schneidet; und
- Figur 7:: Detailansicht einer Schrägansicht auf eine axiale Schnittansicht durch einen Elektromotor gemäß einem dritten Ausführungsbeispiel der vorliegenden Erfindung, die einen Bremsstift eines Bremsaktuator des Elektromotors schneidet.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen. Ebenso wir auf vorangehende oder nachfolgende Figuren bezuggenommen, falls in einer Figurenbeschreibung Bezugszeichen enthalten sind, die in der zugehörigen Figur nicht gezeigt sind.

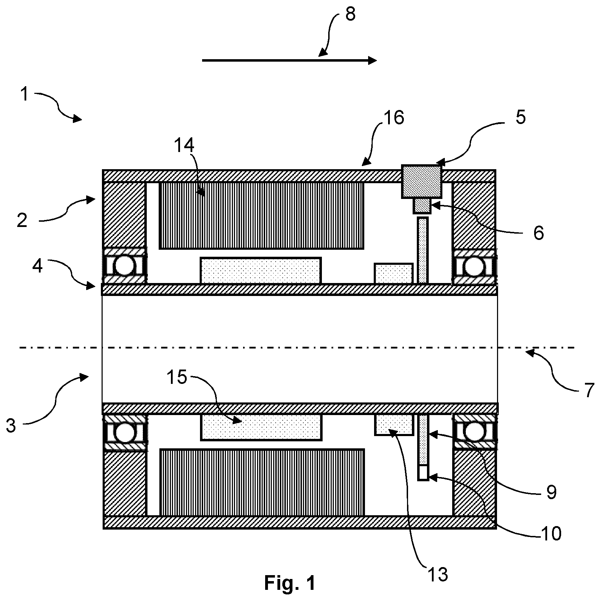

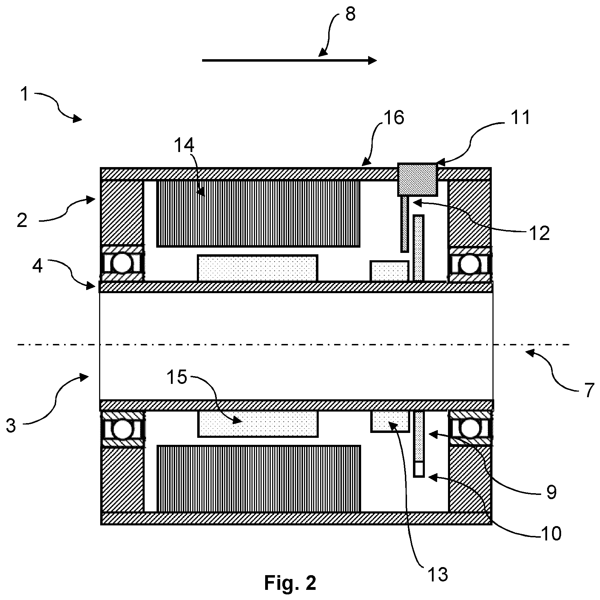

Die Figuren 1 und 2 zeigen ein erstes Ausführungsbeispiel eines erfindungsgemäßen Elektromotor 1 in schematischen axialen Schnittansichten. Der Elektromotor 1 weißt dabei einen Stator 2, der eine Statorwicklung 14 umfasst, einen Rotor 3, der eine Rotorwelle 4 und zumindest einen Rotormagneten 15 umfasst, und einen Bremsaktuator 5 auf. In Figur 1 ist der axiale Schnitt durch den Elektromotor 1 an der Position des Bremsaktuators 5 gezeigt. Der Bremsaktuator 5 umfasst dabei einen Bremsstift 6 und ist dazu eingerichtet, eine Bewegung des Bremsstifts 6 zwischen einer gelösten Position und einer angezogenen Position zu bedingen, wobei der Bremsstift 6 in der angezogenen Position eine Bewegung des Rotors 3 um eine Rotorachse 7, die eine axiale Richtung 8 des Elektromotors 1 definiert, blockiert. In Figur 1 ist der Bremsstift 6 in der gelösten Position gezeigt. Dabei ist der Bremsaktuator 5 derart eingerichtet, dass die Bewegung des Bremsstifts 6 in einer Ebene senkrecht zur Rotorachse 7 erfolgt, wobei die Bewegung im gezeigten Ausführungsbeispiel des Elektromotors in einer radialen Richtung zur Rotorachse 7 erfolgt.

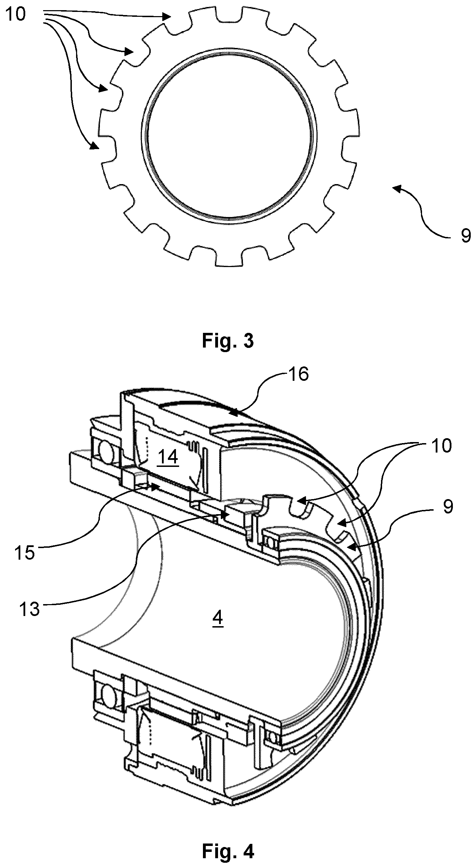

Außerdem ist die Rotorwelle 4 im gezeigten ersten Ausführungsbeispiel als Hohlwelle ausgebildet und der Rotor 3 umfasst einen Brems-Rotor 9, der an einem Umfang des Brems-Rotors 9 verteilte Auskerbungen 10 aufweist, die dazu eingerichtet sind, dass der Bremsstift 6 zumindest in der angezogenen Position in eine der Auskerbungen 10 eingreift und sich in der gelösten Position außerhalb der Auskerbungen 10 befindet. Der Brems-Rotor 9 ist in einer Frontalansicht in Figur 3 abgebildet. Gemäß dem ersten Ausführungsbeispiel des erfindungsgemäßen Elektromotors 1 ist der Brems-Rotor 9 drehfest an der Rotorwelle 4 befestigt, wie dies unteranderem in Figur 4 zu erkennen ist, wobei der Brems-Rotor 9 beispielsweise derart elastisch ausgeführt sein kann, dass eine Bremswirkung durch das Eingreifen des Bremsstifts 5 in eine der Auskerbungen 10 gedämpft ist.

Daneben umfasst der Elektromotor 1 gemäß dem ersten Ausführungsbeispiel einen Encoder 11 mit einer Leiterplatte 12 und der Rotor 3 einen Steuermagnet 13 für den Encoder 11, wobei der Steuermagnet 13 drehfest an der Rotorwelle 4 befestigt ist. Dies ist insbesondere in Figur 2 gezeigt, deren axiale Schnittansicht den Encoder 11 schneidet. Der Encoder 11 und der Bremsaktuator 5 sind dabei in der axialen Richtung 7 neben der Statorwicklung 14 und dem mindestens einen Rotormagneten 15 an einer axialen Position und mit unterschiedlichen Umfangspositionen um den Rotor 3 angeordnet, wobei die Leiterplatte 12 und der Bremsstift 6 in der axialen Richtung 8 versetzt angeordnet sind und die Leiterplatte 12 in der axialen Richtung 8 zwischen der Statorwicklung 14 und dem Bremsstift 6 angeordnet ist. Im ersten Ausführungsbeispiel hat der Bremsaktuator 5 eine axiale Ausdehnung, die gleich einer axialen Ausdehnung des Encoders 11 ist, wobei sich die axiale Ausdehnung des Bremsaktuators 5 und die axiale Ausdehnung des Encoders 11 hinsichtlich ihrer axialen Position vollständig überlappen. In radialer Richtung ist der Steuermagnet 13 gegenüber dem Encoder 11 und der Brems-Rotor 9 gegenüber dem Bremsstift 5 angeordnet.

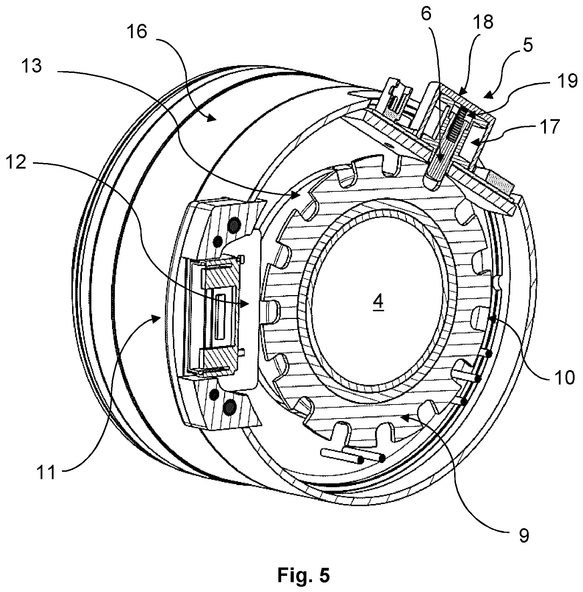

Wie in Figur 5 gezeigt, die eine Schrägansicht auf einen Querschnitt senkrecht zu der axialen Richtung 8 durch den Elektromotor 1 gemäß dem ersten Ausführungsbeispiel an einer axialen Position des Bremsstifts 6 des Bremsaktuators 5 zeigt, weist ein Motorgehäuse 16 des Elektromotors 1 zur Anbringung des Bremsaktuators 5 und des Encoders 11 gemäß dem ersten Ausführungsbeispiel zwei Einschuböffnungen auf. In den jeweiligen Einschuböffnungen sind der Bremsaktuator 5 und der Encoder 11 angebracht, wobei der Bremsaktuator 5 und der Encoder 11 jeweils als austauschbares Modul ausgebildet sind. Hierbei ist der Bremsstift 6 des Bremsaktuators 5 als Hubmagnet ausgebildet, wobei der Bremsaktuator 5 eine nicht gezeigte Spule oder die nicht gezeigte Spule und eine zweite nicht gezeigte Spule in einem Hohlraum 17 in einem Gehäuse 18 des Bremsaktuators 5 umfasst, wobei ein Bestromungszustand der Spule/n die Position des Bremsstifts 6 bedingt. In Figur 5 ist der Bremsstift 6 dabei in der angezogenen Position gezeigt, in der der Bremsstift 6 in eine der Auskerbungen 10 des Brems-Rotor 9 eingreift. Weiter weist der Bremsaktuator 5 eine Feder 19 auf, die den Bremsstift 6 in Richtung der angezogenen Position vorbelastet, wobei die Spule/n den Bremsstift 6 in die gelöste Position bewegt, wenn die Spule/n mit einer Haltespannung bestromt ist.

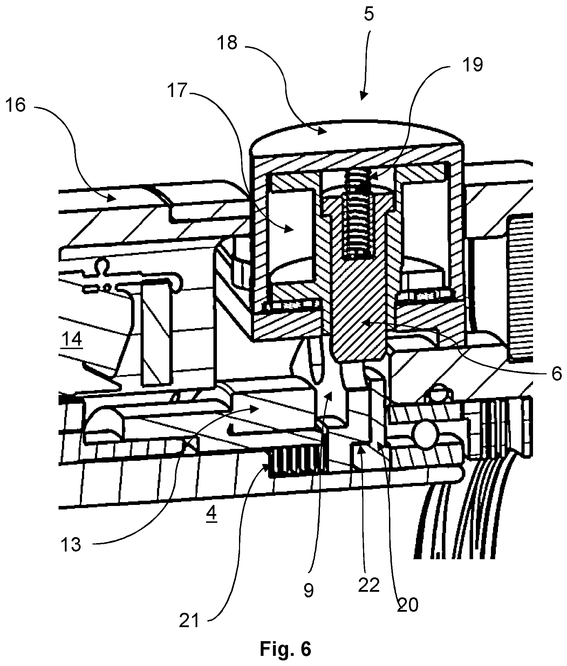

Figur 6 zeigt eine Detailansicht einer Schrägansicht auf eine axiale Schnittansicht durch einen Elektromotor 1 gemäß einem zweiten Ausführungsbeispiel der vorliegenden Erfindung, die einen Bremsstift 6 eines Bremsaktuators 5 des Elektromotors 1 gemäß dem zweiten Ausführungsbeispiel schneidet. Das zweite Ausführungsbeispiel unterscheidet sich von dem ersten Ausführungsbeispiel darin, dass der Brems-Rotor 9 über eine Rutschkupplung mit der Rotorwelle 4 gekoppelt ist und nicht drehfest mit dieser verbunden ist. Für die Rutschkupplung liegt der Brems-Rotor 9 in der axialen Richtung 8 an einem drehfest mit der Rotorwelle 4 verbundenem Ringelement 20 an, wobei ein Federelement 21 den Brems-Rotor 9 in der axialen Richtung 8 auf das Ringelement 20 drückt. Weiter weist das Ringelement 20 eine Schulter 22 auf, auf der der Brems-Rotor 9 in radialer Richtung aufliegt, sodass eine Kontaktfläche in radialer Richtung zwischen dem Brems-Rotor 9 und dem Ringelement 20 vorliegt.

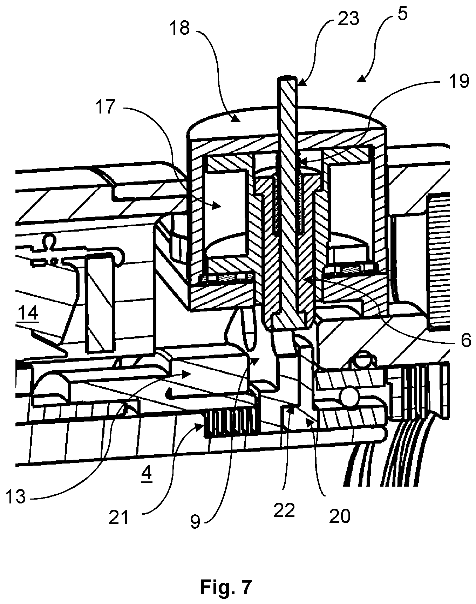

Figur 7 zeigt eine Detailansicht einer Schrägansicht auf eine axiale Schnittansicht durch einen Elektromotor 1 gemäß einem dritten Ausführungsbeispiel der vorliegenden Erfindung, die einen Bremsstift 6 eines Bremsaktuators 5 des Elektromotors 1 gemäß dem dritten Ausführungsbeispiel schneidet. Das dritte Ausführungsbeispiel unterscheidet sich von dem zweiten Ausführungsbeispiel darin, dass der Bremsaktuator 5 ein manuelles Rückziehelement 23 aufweist, das dazu eingerichtet ist, den Bremsstift 6 in die gelöste Position zu bewegen, wenn die Spule und/oder die zweite Spule nicht bestromt ist.

### Bezugszeichenliste

- 1: Elektromotor
- 2: Stator
- 3: Rotor
- 4: Rotorwelle
- 5: Bremsaktuator
- 6: Bremsstift
- 7: Rotorachse
- 8: axiale Richtung
- 9: Brems-Rotor
- 10: Auskerbungen
- 11: Encoder
- 12: Leiterplatte
- 13: Steuermagnet
- 14: Statorwicklung
- 15: Rotormagneten
- 16: Motorgehäuse
- 17: Hohlraum
- 18: Gehäuse des Bremsaktuators
- 19: Feder
- 20: Ringelement
- 21: Federelement
- 22: Schulter
- 23: manuelles Rückziehelement

## Patentansprüche

1. Elektromotor (1) mit einem Stator (2), einem Rotor (3), der eine Rotorwelle (4) umfasst, und einem Bremsaktuator (5), der einen Bremsstift (6) umfasst und dazu eingerichtet ist, eine Bewegung des Bremsstifts (6) zwischen einer gelösten Position und einer angezogenen Position zu bedingen, wobei der Bremsstift (6) in der angezogenen Position eine Bewegung des Rotors (3) um eine Rotorachse (7), die eine axiale Richtung (8) des Elektromotors (1) definiert, blockiert, **dadurch gekennzeichnet, dass** der Bremsaktuator (5) derart eingerichtet ist, dass die Bewegung des Bremsstifts (6) in einer Ebene senkrecht zur Rotorachse (7) erfolgt.

2. Elektromotor (1) nach Anspruch 1, **dadurch gekennzeichnet, dass** die Bewegung des Bremsstifts (6) zwischen der gelösten Position und der angezogenen Position in einer radialen Richtung zur Rotorachse (7) erfolgt.

3. Elektromotor (1) nach Anspruch 1 oder 2, **dadurch gekennzeichnet, dass** die Rotorwelle (4) als eine Hohlwelle ausgebildet ist.

4. Elektromotor (1) nach einem der Ansprüche 1 bis 3, **dadurch gekennzeichnet, dass** der Bremsstift (6) als Hubmagnet ausgebildet ist und der Bremsaktuator (5) eine Spule umfasst, wobei ein Bestromungszustand der Spule die Position des Bremsstifts (6) bedingt.

5. Elektromotor (1) nach Anspruch 4, **dadurch gekennzeichnet, dass** der Bremsaktuator (5) eine Feder (19) aufweist, die den Bremsstift (6) in Richtung der angezogenen Position vorbelastet, wobei die Spule den Bremsstift (6) in die gelöste Position bewegt, wenn die Spule mit einer Haltespannung bestromt ist.

6. Elektromotor (1) nach einem der Ansprüche 1 bis 5, **dadurch gekennzeichnet, dass** der Rotor (3) einen Brems-Rotor (9) umfasst, der an einem Umfang des Brems-Rotors (9) verteilte Auskerbungen (10) aufweist, die dazu eingerichtet sind, dass der Bremsstift (6) zumindest in der angezogenen Position in eine der Auskerbungen (10) eingreift und sich in der gelösten Position außerhalb der Auskerbungen (10) befindet.

7. Elektromotor (1) nach Anspruch 6, **dadurch gekennzeichnet, dass** der Brems-Rotor (9) drehfest an der Rotorwelle (4) befestigt ist, wobei der Brems-Rotor (9) vorzugsweise derart elastisch ausgeführt ist, dass eine Bremswirkung durch das Eingreifen des Bremsstifts (6) in eine der Auskerbungen (10) gedämpft ist.

8. Elektromotor (1) nach Anspruch 6, **dadurch gekennzeichnet, dass** der Brems-Rotor (9) über eine Rutschkupplung mit der Rotorwelle (4) gekoppelt ist, wobei der Brems-Rotor (9) in der axialen Richtung (8) an einem drehfest mit der Rotorwelle (4) verbundenem Ringelement (20) anliegt und ein Federelement (21) den Brems-Rotor (9) in der axialen Richtung (8) auf das Ringelement (20) drückt, wobei vorzugsweise der Brems-Rotor (9) und/oder das Ringelement (20) einen Reibbelag an einer Kontaktfläche des Brems-Rotors (9) und/oder des Ringelements (20) aufweisen.

9. Elektromotor (1) nach einem der Ansprüche 1 bis 8, **dadurch gekennzeichnet, dass** der Elektromotor (1) einen Encoder (11) mit einer Leiterplatte (12) und der Rotor (3) einen Steuermagnet (13) für den Encoder (11) umfasst, wobei der Steuermagnet (13) drehfest an der Rotorwelle (4) befestigt ist.

10. Elektromotor (1) nach Anspruch 9, **dadurch gekennzeichnet, dass** der Encoder (11) und der Bremsaktuator (5) an einer axialen Position und mit unterschiedlichen Umfangspositionen um den Rotor (3) angeordnet sind, wobei vorzugsweise die Leiterplatte (12) und der Bremsstift (6) in der axialen Richtung (8) versetzt angeordnet sind.

11. Elektromotor (1) nach einem der Ansprüche 6 bis 8 und einem der Ansprüche 9 oder 10, **dadurch gekennzeichnet, dass** der Rotor (3) zumindest einen Rotormagneten (15) aufweist und der Stator (2) eine Statorwicklung (14) aufweist, wobei der Steuermagnet (13) und der Brems-Rotor (9) in der axialen Richtung (8) nebeneinander und anschließend an die Statorwicklung (14) und den zumindest einen Rotormagnet (15) angeordnet sind, wobei der Steuermagnet (13) vorzugsweise in der axialen Richtung (8) zwischen der Statorwicklung (14) und dem Brems-Rotor (9) angeordnet ist.

12. Elektromotor (1) nach einem der Ansprüche 1 bis 11, **dadurch gekennzeichnet, dass** der Bremsaktuator (5) in einer Einschuböffnung in einem Motorgehäuse (16) angebracht ist, wobei der Bremsaktuator (5) vorzugsweise als ein austauschbares Modul ausgebildet ist.

13. Elektromotor (1) nach Anspruch 10 und Anspruch 12, **dadurch gekennzeichnet, dass** das Motorgehäuse (16) zumindest zwei, vorzugsweise zwei, Einschuböffnungen aufweist, wobei in eine der Einschuböffnung der Bremsaktuator (5) und eine der Einschuböffnungen der Encoder (11) angebracht sind, wobei vorzugsweise der Bremsaktuator (5) und/oder der Encoder (11) jeweils als austauschbares Modul ausgebildet ist.

14. Elektromotor (1) nach einem der Ansprüche 1 bis 13, **dadurch gekennzeichnet, dass** der Elektromotor (1) einen zweiten Bremsaktuator umfasst, der einen zweiten Bremsstift umfasst und dazu eingerichtet ist, eine Bewegung des zweiten Bremsstifts zwischen einer zweiten gelösten Position und einer zweiten angezogenen Position zu bedingen, wobei der zweite Bremsstift in der angezogenen Position die Bewegung des Rotors (3) um die Rotorachse (7) blockiert, und die Bewegung des zweiten Bremsstifts in der Ebene senkrecht zur Rotorachse (7) erfolgt.

15. Elektromotor (1) nach einem der Ansprüche 1 bis 14, **dadurch gekennzeichnet, dass** der Elektromotor (1) als Gelenkantrieb für Robotikanwendungen ausgebildet ist.
